# EUROPEAN PATENT APPLICATION

(11) **EP 2 910 451 A1**
(43) Date of publication of application: **26.08.2015**
(21) Application number: 13834443.7
(22) Date of filing: 27.06.2013
(51) Int. Cl.: B62D 1/19, B62D 1/18

(54) **IMPACT ABSORBING STEERING SHAFT**

(30) Priority: 05.09.2012 JP 2012195168
(71) Applicant: Kayaba Industry Co., Ltd., Tokyo 105-6111 (JP)
(72) Inventor: CHIBA, Shuhei, Tokyo 105-6111 (JP)
(74) Representative: Grünecker Patent- und Rechtsanwälte PartG mbB
(86) International application number: PCT/JP2013/067658
(87) International publication number: WO 2014/038269

(57) **Abstract**

An impact absorbing type steering shaft, which has one end coupled to a steering wheel of a vehicle, for absorbing impact energy by being contracted at the time of collision of the vehicle includes: an inner shaft having an engagement region on one side, the engagement region having a male tooth portion formed on an outer circumferential surface thereof; and an outer shaft having a female tooth portion formed on an inner circumferential surface thereof, the female tooth portion being slidably engaged with the male tooth portion when the engagement region of the inner shaft is inserted into the female tooth portion. The inner shaft has an impact absorbing region formed on the other side from the engagement region so that an outer diameter of the impact absorbing region becomes larger toward the other side of the inner shaft.

## Description

### TECHNICAL FIELD

The present invention relates to an impact absorbing type steering shaft capable of absorbing an impact at the time of vehicle collision.

### BACKGROUND ART

As a steering shaft used in a conventional power steering device, an impact absorbing type steering shaft is known. The impact absorbing type steering shaft can reduce a load applied to a chest of a driver from a steering wheel at the time of vehicle collision by causing an outer shaft having a female serration and an inner shaft having a male serration to slide in an axial direction.

JP11-291923A describes that impact energy is absorbed by providing a protrusion on a valley portion of the male serration so as to increase resistance during sliding of the outer shaft and the inner shaft by means of shearing resistance of the protrusion.

### SUMMARY OF INVENTION

However, in the conventional technology described above, sliding resistance between the outer shaft and the inner shaft rapidly reaches a peak value when a mountain portion of the female serration crosses over the protrusion of the male serration. For that reason, there is a probability that the sliding resistance rapidly lowers after the peak is passed and the impact energy cannot thereby be absorbed sufficiently. Further, rise of the sliding resistance is so rapid that the sliding between the outer shaft and the inner shaft stops at a position of the protrusion, whereby there is a probability that the impact energy cannot be absorbed sufficiently.

It is an object of the present invention to provide an impact absorbing type steering shaft capable of gently absorbing impact energy.

According to an aspect of the present invention, there is provided an impact absorbing type steering shaft for absorbing impact energy by contracting at the time of collision of a vehicle, the steering shaft having one end coupled to a steering wheel of the vehicle, the steering shaft including: an inner shaft having an engagement region on one side, the engagement region having a male tooth portion formed on an outer circumferential surface thereof; and an outer shaft having a female tooth portion formed on an inner circumferential surface thereof, the female tooth portion being slidably engaged with the male tooth portion when the engagement region of the inner shaft is inserted into the female tooth portion. In this case, the inner shaft has an impact absorbing region formed on the other side from the engagement region so that an outer diameter of the impact absorbing region becomes larger toward the other side of the inner shaft.

### BRIEF DESCRIPTION OF DRAWINGS

FIG. 1A is a side view of an impact absorbing type steering shaft according to an embodiment of the present invention.
FIG. 1B is a cross-sectional view illustrating an IB-IB section in FIG. 1A.
FIG. 2A is a side view for explaining an operation of the impact absorbing type steering shaft according to the embodiment of the present invention.
FIG. 2B is a side view for explaining the operation of the impact absorbing type steering shaft according to the embodiment of the present invention.
FIG. 3 is a diagram illustrating a relationship between a sliding amount and sliding resistance of the impact absorbing type steering shaft according to the embodiment of the present invention.
FIG. 4 is a side view of an impact absorbing type steering shaft according to another embodiment of the present invention.
FIG. 5 is a side view of an impact absorbing type steering shaft according to still another embodiment of the present invention.
FIG. 6 is a side view of an impact absorbing type steering shaft according to still another embodiment of the present invention.
FIG. 7 is a side view illustrating an intermediate shaft of an impact absorbing type steering shaft according to still another embodiment of the present invention.

### DESCRIPTION OF EMBODIMENTS

Hereinafter, embodiments of the present invention will be described with reference to the accompanying drawings.

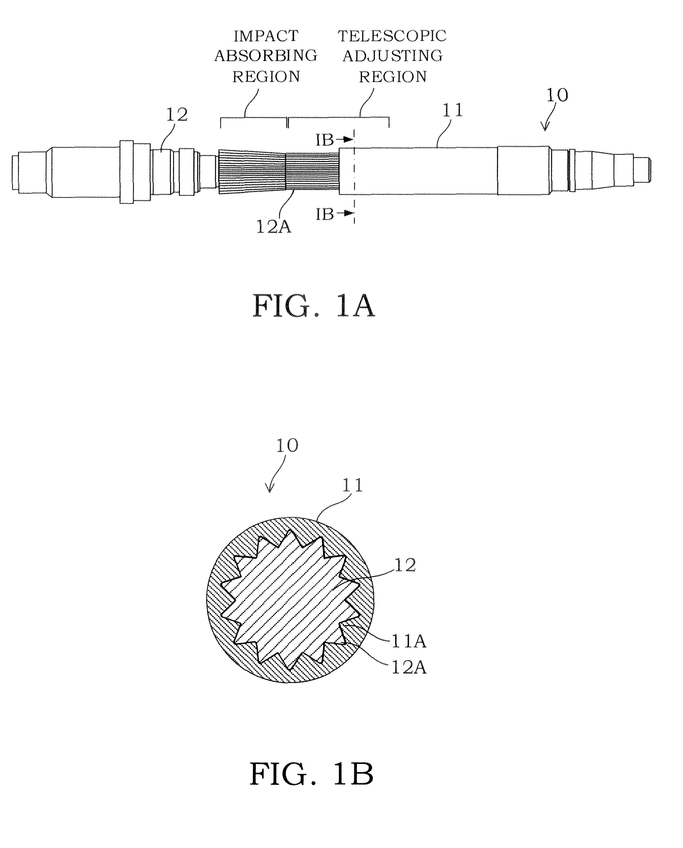

FIG. 1A is a side view of an impact absorbing type steering shaft 10 according to the present embodiment. FIG. 1B is a cross-sectional view illustrating an IB-IB section in FIG. 1A. The following description will be explained by assuming a side of a steering wheel (right side in FIG. 1A) of the impact absorbing type steering shaft 10 as an upper side and a side of a steered wheel (left side in FIG. 1A) is assumed to be a lower side in explanation unless particularly stated otherwise.

The impact absorbing type steering shaft 10 includes an upper shaft 11 as an outer shaft, and a lower shaft 12 as an inner shaft.

The upper shaft 11 is hollow, and an upper end thereof is coupled to the steering wheel (not shown in the drawings). On an inner circumferential surface at a lower side of the upper shaft 11, a female serration 11A as a female tooth portion is formed all over a circumference thereof.

The lower shaft 12 is solid, and an upper end thereof is inserted into the upper shaft 11 from a lower end of the upper shaft 11 and a lower end is coupled to an output shaft (not shown in the drawings) via a torsion bar (not shown in the drawings). On an outer circumferential surface at an upper side of the lower shaft 12, a male serration 12A as a male tooth portion is formed all over a circumference thereof. The lower shaft 12 may be hollow. Further, the lower end of the lower shaft 12 may directly be coupled to the output shaft without providing the torsion bar.

The lower shaft 12 is inserted into the upper shaft 11 only by a predetermined dimension and the female serration 11A of the upper shaft 11 engages with the male serration 12A of the lower shaft 12 slidably each other as illustrated in FIG. 1B.

As a result, a steering force inputted into the steering wheel is transmitted from the upper shaft 11 through an engagement portion by the serrations to the lower shaft 12. Further, the impact absorbing type steering shaft 10 can be expanded and contracted by causing the female serration 11A of the upper shaft 11 and the male serration 12A of the lower shaft 12 to slide with each other.

As illustrated in FIG. 1A, the male serration 12A of the lower shaft 12 has a telescopic adjusting region as an engagement region and an impact absorbing region in order from the upper end side.

The telescopic adjusting region is a region in sliding contact with the female serration 11A of the upper shaft 11 when a driver releases locking of the telescopic adjustment mechanism (not shown in the drawings) and makes longitudinal adjustment of the steering wheel in the axial direction. The impact absorbing region is a region in sliding contact with the female serration 11 A of the upper shaft 11 when a vehicle collides with an obstacle.

In the telescopic adjusting region, the male serration 12A is formed so that a height of the mountain portion, that is, an outer diameter of the lower shaft 12 becomes the same along the axial direction. On the other hand, in the impact absorbing region, the male serration 12A is formed in a taper-shaped manner so that the outer diameter becomes larger toward the downward of the lower shaft 12. Further, the outer diameter of the male serration 12A is formed in a taper-shaped manner to the lower end of the male serration 12A, which is a lower end of the impact absorbing region.

Next, an operation of the impact absorbing type steering shaft 10 will be explained.

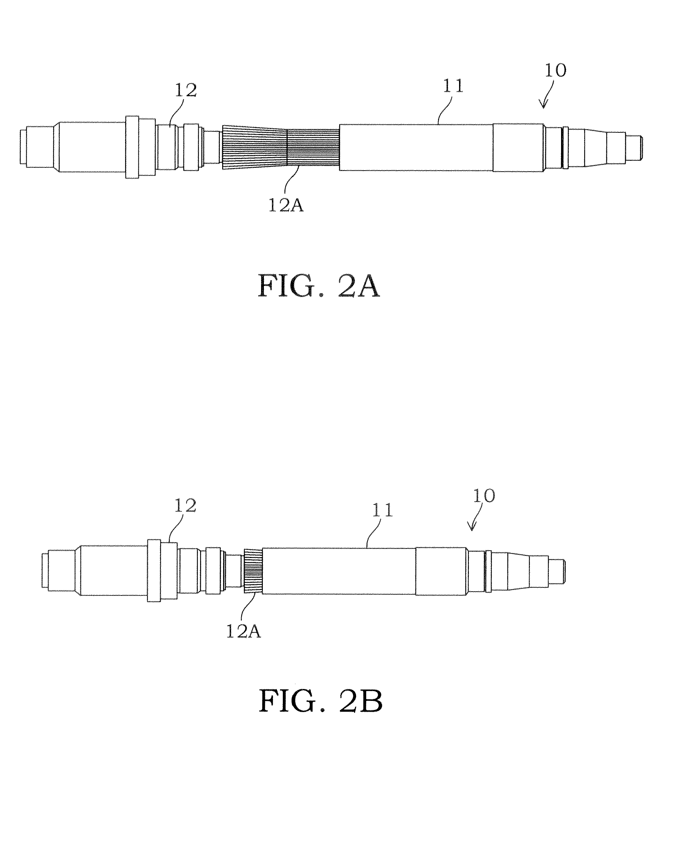

As illustrated in FIG. 2A, in a case where the vehicle collides with an obstacle in a state in which a longitudinal position of the steering wheel, that is, a length of the impact absorbing type steering shaft 10 is fixed at a desired position, an impact load acts on the impact absorbing type steering shaft 10 in the axial direction. As a result, the upper shaft 11 and the lower shaft 12 move in a direction to get closer to each other in the axial direction, and the female serration 11A of the upper shaft 11 slides to the lower side of the male serration 12A of the lower shaft 12.

When the lower end of the female serration 11A enters the impact absorbing region, the male serration 12A and the female serration 11A slide while shaving the tooth (the mountain portion) of the other portion because an inner diameter of the female serration 11A is constant while the outer diameter of the male serration 12A gradually becomes larger. This causes both the male serration 12A and the female serration 11A to be subjected to plastic or shearing deformation. As a result, sliding resistance between the upper shaft 11 and the lower shaft 12 gradually increases, and the upper shaft 11 and the lower shaft 12 stop at a position at which the impact energy has been absorbed (FIG. 2B).

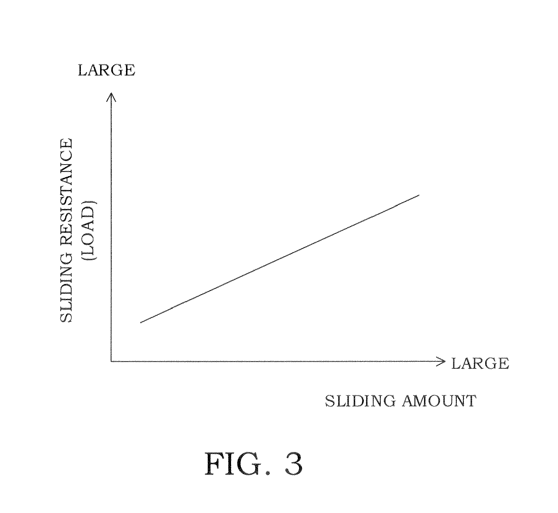

As illustrated in FIG. 3, with respect to the impact energy inputted temporarily and rapidly at the time of the vehicle collision, the sliding resistance gradually increases at a certain rate of increase in accordance with an increase of the sliding amount while the male serration 12A and the female serration 11A are subjected to the plastic or shearing deformation. For this reason, the impact energy can be gently absorbed.

Moreover, an axial length and an outer diameter of the impact absorbing region are set so that the upper shaft 11 and the lower shaft 12 finish absorbing the impact energy at a position (FIG. 2B) before the upper shaft 11 crosses over the male serration 12A. For this reason, as illustrated in FIG. 3, the sliding resistance can be gradually increased all over a sliding process. Namely, such a situation can be prevented that the sliding resistance becomes a peak value in the middle of sliding and the impact energy cannot be absorbed sufficiently any longer.

According to the embodiment described above, effects described below can be achieved.

Since the outer diameter of the male serration 12A of the lower shaft 12 is formed in the taper-shaped manner so as to become larger toward the downward of the lower shaft 12 in the impact absorbing region, the sliding resistance between the upper shaft 11 and the lower shaft 12 at the collision of the vehicle can be gradually increased, and the impact energy can be gently absorbed.

Moreover, since the rate of increase of the sliding resistance at the time of the collision can be changed only by changing inclination of a tapered shape of the male serration 12A, the relationship between the sliding amount and the sliding resistance can be easily tuned.

Moreover, since the tapered shape of the male serration 12A is formed in the taper-shaped manner over the entire region from the upper end to the lower end of the impact absorbing region, such a situation can be prevented that the impact load rapidly rises in the middle of the sliding during absorption of the impact so as to make a peak.

Moreover, since the axial length and the outer diameter of the impact absorbing region are set so that the sliding between the lower shaft 12 and the upper shaft 11 at the time of the collision of the vehicle stops in the impact absorbing region, such a situation can be prevented that the sliding resistance rapidly lowers in the middle of the sliding during absorption of the impact and the impact energy cannot be absorbed sufficiently any longer.

Moreover, since the impact absorbing region is formed so that the sliding resistance increases at the certain rate of increase as the sliding amount between the lower shaft 12 and the upper shaft 11 increases at the time of the collision of the vehicle, the sliding resistance gradually increases in accordance with the sliding amount, and such a situation can be prevented that the impact load fluctuates or rapidly rises in the middle so as to make a peak. This makes it possible to absorb the impact energy more reliably and gently.

The embodiment of the present invention has been described above, but the above embodiment is merely one of examples of applications of the present invention, and the technical scope of the present invention is not limited to the specific configuration of the above embodiment. In accordance with the purpose of this, variations that can be grasped from the above embodiment will be described below.

In the embodiment described above, for example, the male serration 12A of the lower shaft 12 is formed from the telescopic adjusting region to the impact absorbing region, but the male serration 12A may be provided only in the telescopic adjusting region.

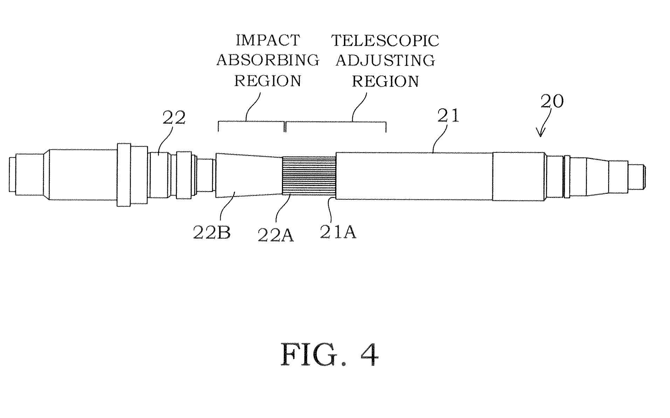

In this case, as illustrated in FIG. 4, the impact absorbing region of the lower shaft 22 is formed in the taper-shaped manner without the serration. Namely, the impact absorbing region is formed in a taper-shaped manner that the outer diameter thereof becomes larger toward the downward of the lower shaft 22 from a diameter of a tooth bottom of the male serration 22A or a diameter smaller than the diameter of the tooth bottom. As a result, since the structure of the lower shaft 22 is simplified, a manufacturing cost of the lower shaft 22 can be reduced.

At the time of collision of the vehicle, the female serration 21A of the upper shaft 21 and the male serration 22A of the lower shaft 22 slide while the lower end of the upper shaft 21 is in the telescopic adjusting region. When the lower end of the female serration 21A enters the impact absorbing region, the outer diameter of the lower shaft 22 gradually becomes larger, while the inner diameter of the female serration 21A is constant. For this reason, the upper shaft 21 and the lower shaft 22 slide while shaving the tooth (the mountain portion) of the female serration 21A, and an outer circumferential surface 22B of the lower shaft 22 and the female serration 21A are subjected to plastic or shearing deformation.

This causes the sliding resistance between the upper shaft 21 and the lower shaft 22 to gradually increase, and the upper shaft 21 and the lower shaft 22 stop at a position at which absorption of the impact energy has been finished.

Further, in a case where the male serration 22A is provided only in the telescopic adjusting region, it is not necessary to provide the male serration 22A over a boundary between the telescopic adjusting region and the impact absorbing region, and a region having the same outer diameter without the male serration 22A may be left between a region where the male serration 22A is to be formed and a region formed in the taper-shaped manner. This makes it possible to improve workability when the male serration 22A is to be formed on the outer circumferential surface 22B of the lower shaft 22.

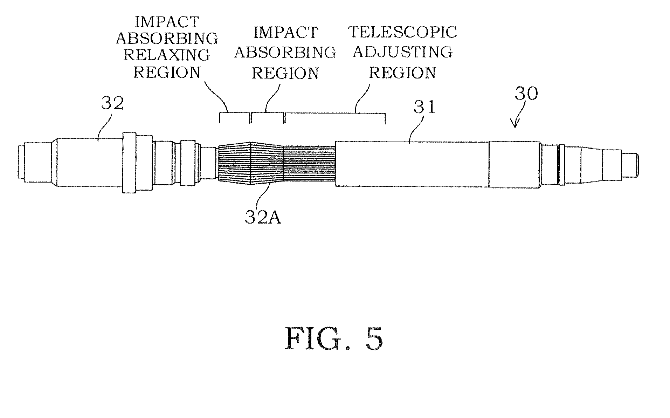

Moreover, in the embodiment described above, the outer diameter of the male serration 12A of the lower shaft 12 is formed in the taper-shaped manner so as to gradually become larger to the lower end of the impact absorbing region. However, as illustrated in FIG. 5, an impact absorbing relaxing region formed in the taper-shaped manner so that an outer diameter of the male serration 32A becomes smaller toward a lower end side may be provided on a lower end side from the impact absorbing region.

As a result, the sliding resistance between the upper shaft 31 and the lower shaft 32 at the collision gradually increases at an initial stage, and then, gradually lowers from the middle of the process. For this reason, a rise of the sliding resistance can be relieved, and this makes it possible to prevent the impact load from exceeding a specified value more reliably.

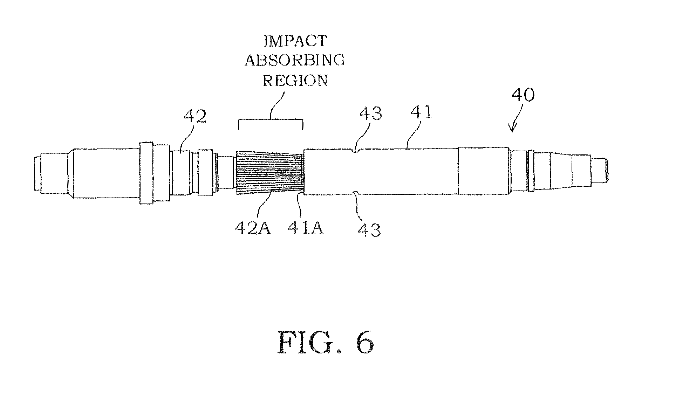

Moreover, in the embodiment described above, the impact absorbing type steering shaft 10 having the telescopic adjustment mechanism has been explained as a premise. However, the present invention can also be applied to an impact absorbing type steering shaft 40 having no telescopic adjustment mechanism. In this case, as illustrated in FIG. 6, a male serration 42A of a lower shaft 42 has only an impact absorbing region without having the telescopic adjusting region. An upper end of the lower shaft 42 is inserted into a position in contact with a caulking portion 43 provided on a lower end side of the upper shaft 41. As a result, the upper shaft 41 and the lower shaft 42 do not relatively move usually, but relatively move only at collision of the vehicle.

When the vehicle collides with an obstacle and an impact load acts on the impact absorbing type steering shaft 40 in the axial direction, the upper shaft 41 and the lower shaft 42 move in a direction to get close to each other in the axial direction, whereby both the male serration 42A and a female serration 41A are subjected to plastic or shearing deformation, and the impact energy is gently absorbed.

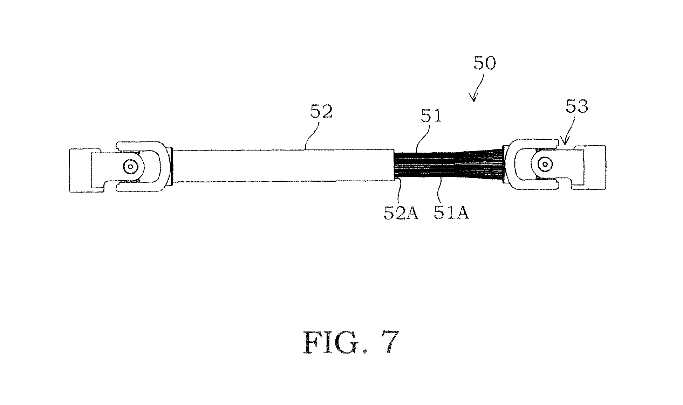

Moreover, in the embodiment described above, the case where the impact absorbing type steering shaft 10 is constituted by the upper shaft 11 and the lower shaft 12 has been exemplified. However, in addition to this case, the present embodiment can also be applied to a case where an intermediate shaft 50 coupled to the lower end of the lower shaft 12 through a joint 53 is provided. In this case, as illustrated in FIG. 7, the intermediate shaft 50 is constituted by an intermediate upper shaft 51 as an inner shaft coupled to the lower end of the lower shaft 12 and an intermediate lower shaft 52 as an outer shaft configured to slidably house the intermediate upper shaft 51 therein.

A male serration 51A is formed over the whole circumference of an outer circumferential surface of the intermediate upper shaft 51 similarly to the lower shaft 12, and a female serration 52A is formed over the whole circumference of an inner circumferential surface of the intermediate lower shaft 52 similarly to the upper shaft 11. Moreover, the male serration 51A of the intermediate upper shaft 51 is formed in a taper-shaped manner so that an outer diameter thereof becomes larger toward the upward of the intermediate upper shaft 51 from the middle.

As a result, in a case where the intermediate upper shaft 51 and the intermediate lower shaft 52 relatively move at the collision of the vehicle, the serrations 51A and 52A of the both shafts 51 and 52 are subjected to plastic or shearing deformation, whereby the impact energy can be absorbed.

In this case, similarly to FIG. 6, it may also be configured so that a caulking portion is provided on an upper end side of the intermediate lower shaft 52 and a lower end of the intermediate upper shaft 51 is inserted into a position in contact with the caulking portion. As a result, the intermediate upper shaft 51 and the intermediate lower shaft 52 do not relatively move usually, but relatively move only at the collision of the vehicle.

Further, it may be configured so that impact absorption is carried out only by the intermediate shaft 50 or is carried out by both the impact absorbing type steering shaft 10 illustrated in FIG. 1A and the intermediate shaft 50.

Moreover, in the embodiment described above, the case where the upper shaft 11 coupled to the steering wheel is the outer shaft and the lower shaft 12 coupled to the output shaft is the inner shaft has been exemplified. However, to the contrary, the upper shaft may be the inner shaft and the lower shaft may be the outer shaft. In this case, the male serration is formed on an outer circumference of the upper shaft, and the female serration is formed on an inner circumference of the lower shaft.

Moreover, in the embodiment described above, the male serration 12A of the lower shaft 12 and the female serration 11A of the upper shaft 11 are caused to engage with each other. However, the both serrations 12A and 11A do not necessarily have to be serrations with sharp tooth-tips, and they may be splines each having a trapezoidal tooth with a flat surface at a tip end, for example.

Moreover, in the embodiment described above, the serrations are formed on the outer circumference of the lower shaft 12 and the inner circumference of the upper shaft 11. The lower shaft 12 is formed in the taper-shaped manner so that the outer diameter becomes larger toward the downward in the axial direction. The lower shaft 12 and the upper shaft 11 relatively move at the time of the collision of the vehicle, whereby the impact is absorbed by plastic or shearing deformation of the both serrations. However, other impact absorption mechanism may be combined.

For example, a configuration in which impact absorption mechanisms respectively fitted in a bracket and a capsule that relatively move at the time of collision of the vehicle are fractured at the time of the collision of the vehicle so as to absorb impact may be combined.

Moreover, for example, a configuration in which an upper column tube side and a lower column tube side are coupled by an S-shaped plate and the S-shaped plate is rubbed with relative movement of the upper column tube and the lower column tube at the time of the collision of the vehicle so as to absorb impact may be combined.

The present application claims priority based on Japanese Patent Application No. 2012-195168 filed with the Japan Patent Office on September 5, 2012, the entire content of which is incorporated into the present specification by reference.

## Claims

1. An impact absorbing type steering shaft for absorbing impact energy by contracting at the time of collision of a vehicle, the steering shaft having one end coupled to a steering wheel of the vehicle, the steering shaft comprising:
an inner shaft having an engagement region on one side, the engagement region having a male tooth portion formed on an outer circumferential surface thereof; and
an outer shaft having a female tooth portion formed on an inner circumferential surface thereof, the female tooth portion being slidably engaged with the male tooth portion when the engagement region of the inner shaft is inserted into the female tooth portion,
wherein the inner shaft has an impact absorbing region formed on the other side from the engagement region so that an outer diameter of the impact absorbing region becomes larger toward the other side of the inner shaft.

2. The impact absorbing type steering shaft according to claim 1,
wherein an axial length and an outer diameter of the impact absorbing region are set so that sliding between the inner shaft and the outer shaft at the time of the collision of the vehicle stops within the impact absorbing region.

3. The impact absorbing type steering shaft according to claim 1,
wherein the impact absorbing region is formed so that sliding resistance increases at a certain rate of increase as a sliding amount between the inner shaft and the outer shaft increases at the time of the collision of the vehicle increases.

4. The impact absorbing type steering shaft according to claim 1,
wherein the male tooth portion is formed on an outer circumferential surface of the impact absorbing region of the inner shaft, and
wherein the impact absorbing region is formed so that an outer diameter of the male tooth portion becomes larger toward the other side of the inner shaft.

5. The impact absorbing type steering shaft according to claim 4,
wherein the inner shaft has an impact absorbing relaxing region formed on the other side of the inner shaft of the impact absorbing region so that the outer diameter of the male tooth portion becomes smaller toward the other side of the inner shaft.

6. The impact absorbing type steering shaft according to claim 1,
wherein the impact absorbing region is formed in the taper-shaped manner without forming the male tooth portion and is formed so that the outer diameter becomes larger toward the other side of the inner shaft.
